# EUROPÄISCHE PATENTANMELDUNG

(11) **EP 0 873 843 A1**
(43) Veröffentlichungstag der Anmeldung: **28.10.1998**
(21) Anmeldenummer: 98102175.1
(22) Anmeldetag: 09.02.1998
(51) Int. Cl.: B29C 45/64

(54) **Verfahren zur Herstellung von Kleinstformteilen aus Kunststoff durch Spritzgiessen**

(30) Priorität: 24.04.1997 DE 19717221
(71) Anmelder: Battenfeld GmbH, D-58540 Meinerzhagen (DE)
(72) Erfinder: Bleier, Harald, 2700 Wiener Neustadt (AT); Kukla, Christian, Dr., 2540 Bad Vöslau (AT)
(74) Vertreter: Gosdin, Michael, Dr.

(57) **Zusammenfassung**

Die Erfindung betrifft ein Verfahren zur Herstellung von Kleinstformteilen aus Kunststoff durch Spritzgießen, bei dem plastifizierte Kunststoffschmelze (3) in ein mindestens zweiteiliges Spritzgießwerkzeug (1, 2) eingespritzt wird. Erfindungsgemäß ist vorgesehen, daß zunächst das eine Teil (1) des Spritzgießwerkzeugs (1, 2) auf einer Werkzeugaufspannplatte (3) aufgespannt wird, daß anschließend das mindestens eine andere Teil (2) des Spritzgießwerkzeugs (1, 2) im wesentlichen ohne Anpreßkraft auf das eine Teil (1) des Spritzgießwerkzeugs (1, 2) aufgesetzt wird und daß schließlich das Spritzgießwerkzeug (1, 2) alleine durch die Andruckkraft (F) eines Spritzaggregats (4) während des Einspritzens von Kunststoffmaterial zusammengehalten wird. Beim Spritzgießen von Kleinst-Formteilen wird damit ein einfacher Verfahrensverlauf erreicht.

## Beschreibung

Die Erfindung bezieht sich auf ein Verfahren zur Herstellung von Kleinstformteilen aus Kunststoff durch Spritzgießen, bei dem plastifizierte Kunststoffschmelze in ein mindestens zweiteiliges Spritzgießwerkzeug eingespritzt wird.

Verfahren dieser Art sind hinlänglich bekannt. In der JP 1-72815 A ist ein Spritzgießverfahren beschrieben, bei dem die Spitze einer Einspritzdüse unmittelbar vor dem Einspritzvorgang in Kontakt mit dem Werkzeug gebracht wird und eine Andruckkraft auf das Werkzeug ausübt. Das Werkzeug selber ist dabei konisch bzw. keilartig ausgeführt, so daß die Andruckkraft der Einspritzdüse über den Keileffekt eine Werkzeugspannkraft zur Folge hat.

In jüngerer Zeit ist der Bedarf aufgetreten, Spritzgießformteile mit besonders kleinen Ausmaßen herzustellen. Hier sind mikro-mechanische Bauteile (z. B. Mikrozahnräder für Kleinstpumpen), medizintechnische Kleinteile und optoelektronische Elemente (z. B. Teile für Lichtleiter) als Beispielbauteile zu nennen, bei denen die Herstellung mit klassisschen Spritzgießmaschinen Probleme bereitet. Andererseits sind Klassische Spritzgießmaschinen zu diesem Zwecke häufig nicht vernünftig dimensioniert und unnötigerweise zu aufwendig aufgebaut.

Die Erfindung hat die **Aufgabe**, ein Verfahren der eingangs genannten Art zu schaffen, mit dem auf einfache Weise ohne hohen apparativen Aufwand Kleinstspritzgießteile hergestellt werden können, wobei der Schwerpunkt auf einem einfachen Verfahrensablauf liegen soll.

In Verbindung mit dem Oberbegriff des Patentanspruchs 1 wird diese Aufgabe dadurch gelöst,
- daß zunächst das eine Teil (1) des Spritzgießwerkzeugs (1, 2) auf einer Werkzeugaufspannplatte (3) aufgespannt wird,
- daß anschließend das mindestens eine andere Teil (2) des Spritzgießwerkzeugs (1, 2) im wesentlichen ohne Anpreßkraft auf das eine Teil (1) des Spritzgießwerkzeugs (1, 2) aufgesetzt wird und
- daß schließlich das Spritzgießwerkzeug (1, 2) alleine durch die Andruckkraft (F) eines Spritzaggregats (4) während des Einspritzens von Kunststoffmaterial zusammengehalten wird.

D. h. das vorgeschlagene Verfahren verzichtet auf ein - sonst übliches - Zusammenspannen des Werkzeugs während des Einspritzvorganges. Die Zusammenhaltekraft wird alleine durch die Düsenanlage aufgebracht. Es wird also keine düsenseitige Schließplatte verwendet.

Vorteilhafterweise kann vorgesehen werden, daß eine feste Verbindung zwischen dem anderen Teil (2) des Spritzgießwerkzeugs (1, 2) und dem Spritzaggregat (4) hergestellt wird und daß das Spritzgießwerkzeug (1, 2) durch die Rückfahrbewegung des Spritzaggregats (4) wieder geöffnet wird.

Damit wird ein automatischer Betrieb der Spritzgießmaschine erleichtert: Das eine Werkzeugteil und die Düse sind - permanent oder zumindest zeitweise - verbunden, so daß insbesondere die Öffnung des Werkzeugs nach dem Erstatten oder Aushärten des Formteils dadurch bewerkstelligt wird, daß das Spritzaggregat zurückgezogen wird; die beiden Werkzeughälften werden dadurch getrennt. Die Verbindung von Düsenendteil und Werkzeughälfte kann auch permanent sein, so daß auch das Aufsetzen der zweiten Werkzeughälfte auf die erste automatisch dadurch erfolgt, daß das Spritzaggregat herangefahren wird.

In der Zeichnung ist ein Ausführungsbeispiel der Erfindung dargestellt.
- Fig. 1: zeigt schematisch eine Werkzeughälfte,
- Fig. 2: zeigt eine auf diese Werkzeughälfte aufgesetzte zweite Werkzeughälfte und
- Fig. 3: zeigt den Zustand während des Einspritzens von Schmelze ins Werkzeug.

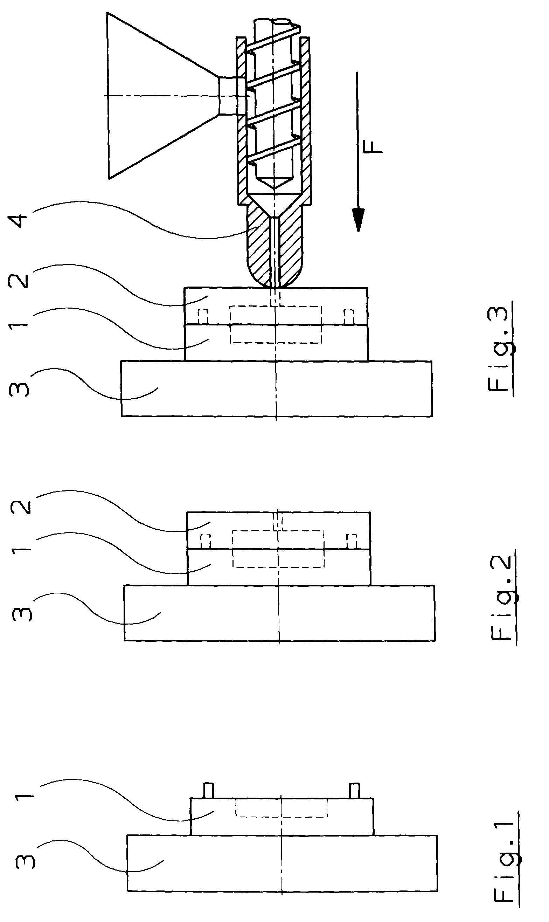

In Fig. 1 ist schematisch eine fest angeordnete Werkzeugaufspannplatte 3 zu sehen, auf der das eine Teil 1 eines zweiteiligen Spritzgießwerkzeugs 1, 2 befestigt ist.

Für die Herstellung eines Spritzgießformteils wird das zweite Werkzeugteil 2 auf das erste Teil 1 per Hand aufgesetzt; dies ist in Fig. 2 bereits geschehen. Da es sich um die Herstellung von Kleinst-Spritzgießformteilen handelt, die meist nur wenige Gramm - in Extremfällen sogar nur wenige Milligramm - Masse haben, sind auch die dafür erforderlichen Werkzeuge relativ klein und leicht, so daß die Positionierung des zweiten Teils 2 auf dem ersten Teil 1 per Hand keine Schwierigkeiten bereitet.

Zum Einspritzen der Schmelze ins Werkzeug 1, 2, wird ein Spritzaggregat 4 mit einer Andruckkraft F an die zweite Werkzeughälfte 2 angepreßt, s. Fig. 3. Diese Andruckkraft reicht aus, um das Werkzeug während des Einspritzens so fest zusammenzuhalten, daß die von beiden Werkzeughälften 1, 2 im Inneren definierte Kavität genau der gewünschten Form entspricht. Auf diese Art und Weise können Zuhaltekräfte bis ca. 1 Tonne aufgebracht werden, was für Spritzgießverhältnisse relativ wenig ist.

Die Entformung des Teils erfolgt in umgekehrter Reihenfolge: Das Spritzaggregat 4 wird zurückgefahren und das Werkzeug per Hand oder mit einfachen Hilfsmitteln geöffnet, d. h. die Teile 1 und 2 werden getrennt und das Formteil entnommen.

### Bezugszeichenliste:

- 1, 2: Spritzgießwerkzeug
- 3: Werkzeugaufspannplatte
- 4: Spritzaggregat
- F: Andruckkraft des Spritzaggregats

## Patentansprüche

1. Verfahren zur Herstellung von Kleinstformteilen aus Kunststoff durch Spritzgießen, bei dem plastifizierte Kunststoffschmelze (3) in ein mindestens zweiteiliges Spritzgießwerkzeug (1, 2) eingespritzt wird,
**dadurch gekennzeichnet**,
- daß zunächst das eine Teil (1) des Spritzgießwerkzeugs (1, 2) auf einer Werkzeugaufspannplatte (3) aufgespannt wird,
- daß anschließend das mindestens eine andere Teil (2) des Spritzgießwerkzeugs (1, 2) im wesentlichen ohne Anpreßkraft auf das eine Teil (1) des Spritzgießwerkzeugs (1, 2) aufgesetzt wird und
- daß schließlich das Spritzgießwerkzeug (1, 2) alleine durch die Andruckkraft (F) eines Spritzaggregats (4) während des Einspritzens von Kunststoffmaterial zusammengehalten wird.

2. Verfahren nach Anspruch 1, dadurch gekennzeichnet, daß eine feste Verbindung zwischen dem anderen Teil (2) des Spritzgießwerkzeugs (1, 2) und dem Spritzaggregat (4) hergestellt wird und daß das Spritzgießwerkzeug (1, 2) durch die Rückfahrbewegung des Spritzaggregats (4) wieder geöffnet wird.
